# EUROPEAN PATENT APPLICATION

(11) **EP 2 699 070 A2**
(43) Date of publication of application: **19.02.2014**
(21) Application number: 13175056.4
(22) Date of filing: 04.07.2013
(51) Int. Cl.: H05K 13/04, B25J 15/02, B23Q 3/10

(54) **Work processing apparatus**

(30) Priority: 11.07.2012 JP 2012155113; 05.03.2013 JP 2013042463
(71) Applicant: Startechno Company Limited, Komaki-shi Aichi 485-0085 (JP)
(72) Inventor: Hishikawa, Tatsumi, Komaki-shi, Aichi 485-0085 (JP)
(74) Representative: Hofstetter, Alfons J.

(57) **Abstract**

To provide work processing apparatus capable of positioning and stably supporting various types of works of different shapes and capable of performing processing effectively by supporting a work in an arbitrary posture.

A work processing apparatus positions a reference support member to a center portion of a work, moves support members in directions in which they approach and separate from each other and an up-down direction in accordance with supporting portions of the work, and performs required processing by controlling movement of a work processing section in a state where the work is supported in a given posture by the reference support member and two support members.

## Description

### BACKGROUND OF THE INVENTION

### Field of the Invention

The present invention relates to a work processing apparatus that positions a work using a support member capable of carrying out position adjustment of the work according to a size and a shape thereof and applies required processing to the work in a stably supported state.

### Description of the Related Art

For example, a molded work, such as a resin molded article, has a burr which is integrally formed with an outer periphery thereof. In order to bring this work to market, the burr needs to be removed. Further, before marketing the work, various processing such as drilling and trimming need to be applied to the work. When such processing is performed, the work needs to be set in a work support jig that supports/holds the work in a positioned state. However, when a work to be processed is changed to another one that has a different size or a different shape, the work support jig needs to be changed accordingly to another one adapted to the another work.

Thus, there is a need to prepare a plurality of different work support jigs in accordance with a type of the work, which disadvantageously increases facility cost and requires a large stock space.

A work support disclosed in, e.g., Patent Document 1 (Jpn. Pat. Appln. Laid-Open Publication No. 2008-235700) is proposed to solve the above problem. The work support includes: a support base having a plurality of cylinder chambers each in which a support piston that causes a support rod to move between a forward movement limit position to be in contact with a work and a rearward movement limit position is accommodated so as to be capable of reciprocating and each partitioned into a forward movement pressure chamber on a rear end surface side of the support piston and a rearward movement pressure chamber on a front end surface side thereof; a changeover valve accommodated, in a valve chamber formed in the support base in communication with the forward movement pressure chamber, so as to be capable of reciprocating in an axial direction thereof and having an opposing surface opposed to the rear end surface of the support piston to constitute the forward movement pressure chamber, a pressure receiving surface positioned on an opposite side to the opposing surface and having a diameter larger than a diameter of the opposing surface, and a through hole allowing communication between the opposing surface and pressure receiving surface; a changeover piston accommodated, in an accommodation hole formed in the support base in communication with the valve chamber, so as to be opposed to the pressure receiving surface of the changeover valve and so as to be capable of reciprocating and driving the support piston through the changeover valve to a preparation position between the forward movement limit position and rearward movement limit position; a changeover flow path formed in the support base and supplying the changeover piston with a pressure of fluid flowing toward the preparation position; a forward movement flow path formed in the support base and designed such that a communication state with the forward movement pressure chamber is made possible through the through hole of the changeover valve in a state where the support piston driven by the changeover piston through the changeover valve is situated at the preparation position and that the communication state is shut off by the changeover valve in a state where the support piston is situated at the rearward movement limit position; and a rearward flow path formed in the support base and communicating with the rearward movement pressure chamber. With this configuration, the work is supported by some support rods that are selectively moved to the forward movement limit position according to a support portion of the work.

However, a size of a work to be supported by the above work support is restricted to a size comparable to or smaller than the support base, that is, the above work support cannot support a work having a size larger than the support base. In addition, when the support pins are displaced with respect to the support portions of a work, the work cannot be supported stably in a positioned state.

In actual processing step of a work, there is a need to change a posture (e.g., forward inclined state, rearward inclined state, or horizontal state) of the work to be processed according to the size or shape of the work. However, in the above work support, the support pins are projected to a fixed height position for supporting the work, so that the work cannot be set in the forward inclined state or rearward inclined state, resulting in failing to perform effective processing.

Further, in the above work support, the changeover valve is provided for each support pin, and each changeover pin is controlled so as to move the support pins selected according to the support points. This complicates a control mechanism of the changeover valve, leading to an increase in device cost.

Further, in applying processing, such as drilling or cutting by using a drilling machine or a rotary blade, to a predetermined portion to be processed of a work supported by the above work support, a processing member such as the drilling machine or rotary blade is pressed against a portion to be processed of the work. However, the above work support can support portions distanced from the portion to be processed but is not designed to support portions around the portion to be processed. Therefore, the work may be bent or displaced by being pressed by the processing member to deteriorate processing accuracy.

### SUMMARY OF THE INVENTION

Problems to be solved are: that the maximum size of a work to be supported is restricted to the size of the support base and, thus, a work having a size larger than the support base cannot be supported; when the support pins are displaced with respect to the support portions of a work, the work to be subjected to required processing cannot be supported stably in a positioned state; the work cannot be supported in an arbitrary posture, thus failing to perform processing effectively; and the work is supported at portions distanced from a portion to be processed, so that the work may be bent or displaced by being pressed by the processing member to deteriorate processing accuracy.

An object of the present invention is to provide a work processing apparatus capable of: positioning and stably supporting various types of works of different shapes to be subjected to required processing; performing processing effectively by supporting a work in an arbitrary posture; and supporting portions around portions to be processed to prevent the work to be processed from being bent or displaced due to press contact of a processing member to achieve precise processing.

### BRIEF DESCRIPTION OF THE DRAWINGS

FIG. 1 is a schematic perspective view of a burr removing apparatus as a work processing apparatus provided with work support;
FIG. 2 is a partly exploded perspective view illustrating a front side work support mechanism;
FIG. 3 is a partly exploded perspective view illustrating a rear side work support mechanism;
FIG. 4 is a partly exploded perspective view illustrating a work support mechanism in an intermediate part;
FIG. 5 is a plan view illustrating a state where front side holding members are moved to the maximum extent in front-rear and left-right directions and rear side holding members are moved to the maximum extent in the left-right direction;
FIG. 6 is a side view illustrating a state where a work is supported in a horizontal state;
FIG. 7 is a side view illustrating a state where a work is supported in a forward inclined state;
FIG. 8 is a side view illustrating a state where the work is supported in a rearward inclined state;
FIG. 9 is a schematic plan view of a work processing apparatus according to a second embodiment;
FIG. 10 is a schematic explanatory view of a movable support according to the second embodiment;
FIG. 11 is an explanatory view illustrating a movable area of a support member of the movable support according to the second embodiment; and
FIG. 12 is an explanatory view illustrating a modification of the movable support according to the second embodiment.

### DESCRIPTION OF THE PREFERRED EMBODIMENTS

### [First Embodiment]

Hereinafter, the present invention will be described based on an embodiment of a work processing apparatus embodied as a burr removing apparatus for resin molding that cuts off a burr integrally formed with a resin molding as a work.

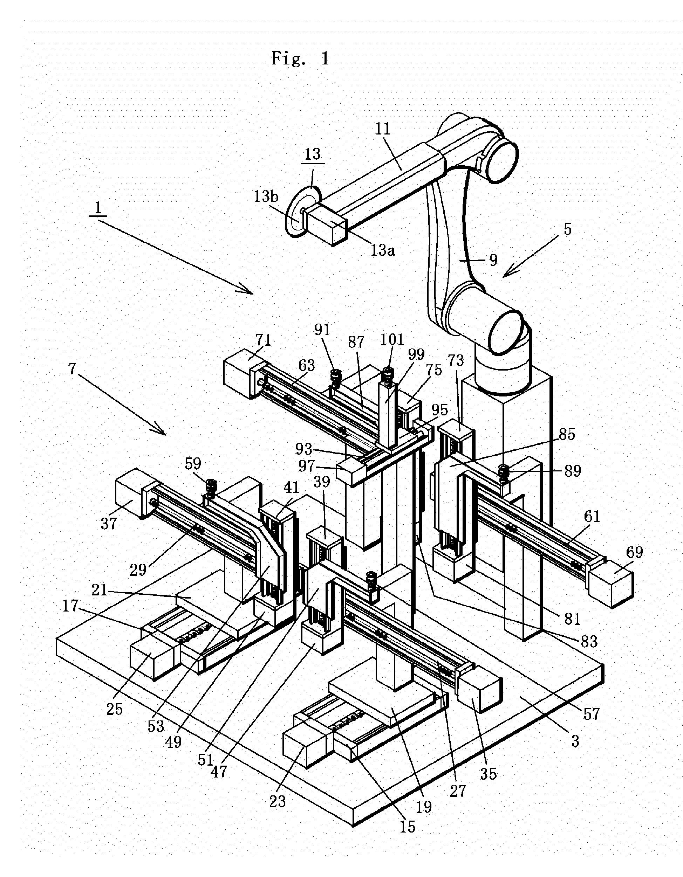

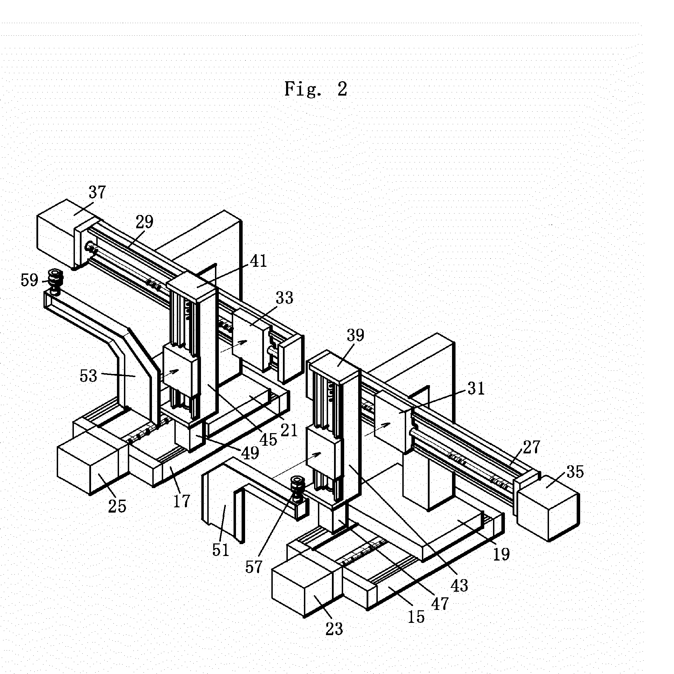

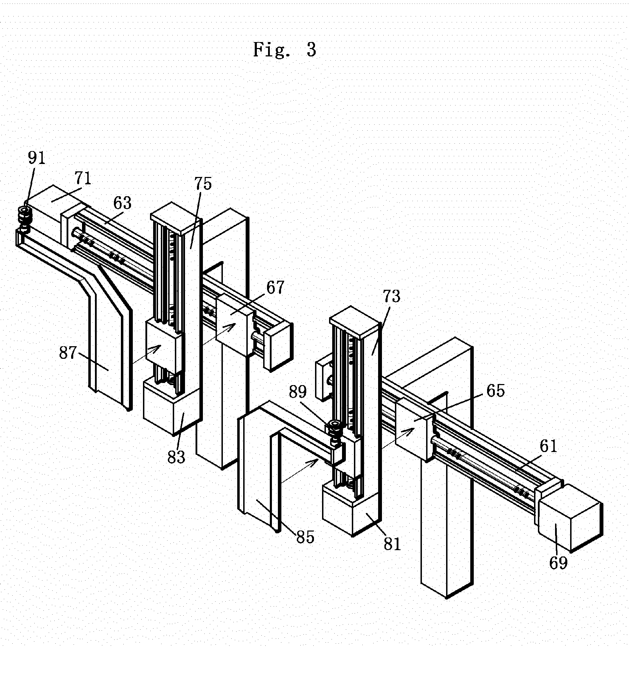

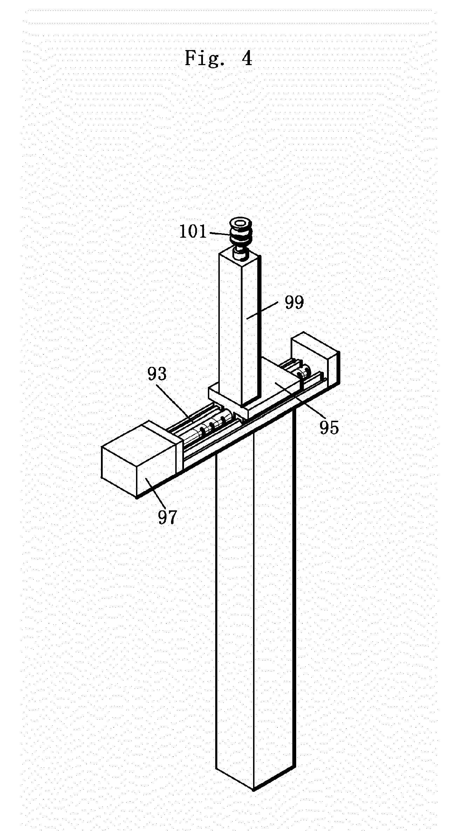

As illustrated in FIGS. 1 to 4, a burr removing apparatus 1 for resin molding embodied as a work processing apparatus provided with a work support 7 has, on a body frame 3 thereof, a burr cutting apparatus 5 as a work processing section and a work support 7. The burr cutting apparatus 5 is disposed on a rear side of the body frame 3 in a direction (hereinafter, sometimes referred to as "front-rear direction") orthogonal to a longitudinal direction of the body frame 3 and the work support 7 is disposed on a front side thereof. A vehicle panel or a vehicle bumper 14 which is a resin molding as a work is supported in a positioned state by the work support 7.

The burr cutting apparatus 5 as a work processing section includes a multi-joint robot that rotates and swings first and second arms 9, 11 connected to each other in multiaxial directions and attached with a cutting member 13 as a work processing member. The burr cutting apparatus 5 rotates and turns the first and second arms 9, 11 such that the cutting member 13 moves in at least three-axis directions.

The cutting member 13 has a structure obtained by attaching a rotary blade 13b to an output shaft of an electric motor 13a and is configured to move the rotating rotary blade 13b along an outer edge of the vehicle bumper 14 to cut off the burr (not illustrated).

The work processing section is not limited to the above-mentioned burr cutting apparatus 5, but may be an apparatus that performs trimming processing of cutting off a projecting piece projecting from an outer edge of a work, a drilling apparatus that performs drilling for a work using a drill bit, or the like. In a case where the above processing apparatus is robotized, an orthogonal-type robot, etc., that moves the work processing section in orthogonal three directions may be adopted.

The work support 7 is configured as follows. First and second front-rear frames 15, 17, each extending in a front-rear direction, are fixed respectively to longitudinal direction right and left side portions of a front side of the body frame 3. First and second front-rear movable bodies 19, 21 are supported by the front-rear frames 15, 17, respectively, so as to be movable in the front-rear direction. First and second electric motors 23, 25 (numerically-controllable servo motors, etc.) mounted to the corresponding front-rear frames 15, 17 are drive-connected respectively to the first and second front-rear movable bodies 19, 21. The first and second front-rear movable bodies 19, 21 are driven by the electric motors 23, 25, respectively, to reciprocate in an independent manner in the front-rear direction.

First and second left-right frames 27, 29, each extending in a left-right direction in the drawings, are fixed to the front-rear movable bodies 19, 21, respectively, at their left-right direction intermediate portions. First and second left-right movable bodies 31, 33 are supported by the first and second left-right frames 27, 29, respectively, so as to be movable in the left-right direction. Third and fourth electric motors 35, 37 (numerically-controllable servo motors, etc.) mounted to the corresponding first and second left-right frames 27, 29 are drive-connected respectively to the first and second left-right movable bodies 31, 33. The first and second left-right movable bodies 31, 33 are driven by the electric motors 35, 37, respectively, to reciprocate in an independent manner in the left-right direction.

First and second up-down frames 39, 41 are mounted to the first and second left-right movable bodies 31, 33, respectively. First and second up-down movable bodies 43, 45 are supported by the up-down frames 39, 41, respectively, so as to be movable in an up-down direction. Fifth and sixth electric motors 47, 49 (numerically-controllable servo motors, etc.) mounted to the corresponding up-down frames 39, 41 are drive-connected respectively to the first and second up-down movable bodies 43, 45. The first and second up-down movable bodies 43, 45 are driven by the electric motors 47, 49, respectively, to reciprocate in an independent manner in the up-down direction.

Mounting arms 51, 53 are mounted to the first and second up-down movable bodies 43, 45, respectively. Holding members 57, 59 are mounted to upper portions of the mounting arms 51, 53, respectively. The holding members 57, 59, which constitute a one-end-side support member, are each an elastic member abutting against a rear surface of the vehicle bumper 14 to be processed to elastically support it, an adsorbing member connected to a negative pressure generator (not illustrated) to adsorb and hold the rear surface of the vehicle bumper 14, or a gripping member that grips a projecting piece (not illustrated) integrally formed with the rear surface of the vehicle bumper 14 (in this example, the holding members 57, 59 are each formed as the absorbing member).

Although the front-rear movable bodies 19, 21 are moved in the front-rear direction in an independent manner to move the holding members 57, 59 to desired positions in the front-rear direction in the above description, a single front-rear frame extending in the front-rear direction may be mounted to the body frame 3 so as to move the holding members 57, 59 in an integrated manner in the front-rear direction.

Third and fourth left-right frames 61, 63 each extending in the left-right direction in the drawings, are fixed respectively to a rear side of the body frame 3. Third and fourth left-right movable bodies 65, 67 are supported by the left-right frames 61, 63 respectively, so as to be movable in the left-right direction. Seventh and eighth electric motors 69, 71 (numerically-controllable servo motors, etc.) mounted to the corresponding third and fourth left-right frames 61, 63 are drive-connected respectively to the third and fourth left-right movable bodies 65, 67. The third and fourth left-right movable bodies 65, 67 are driven by the electric motors 69, 71 respectively, to reciprocate in an independent manner in the left-right direction.

Third and fourth up-down frames 73, 75 are mounted to the third and fourth left-right movable bodies 65, 67, respectively. Third and fourth up-down movable bodies 77, 79 are supported by the up-down frames 73, 75, respectively, so as to be movable in an up-down direction. Ninth and tenth electric motors 81, 83 (numerically-controllable servo motors, etc.) mounted to the corresponding up-down frames 73, 75 are drive-connected respectively to the third and fourth up-down movable bodies 77, 79. The up-down movable bodies 77, 79 are driven by the electric motors 81, 83, respectively, to reciprocate in an independent manner in the up-down direction.

Mounting arms 85, 87 are mounted to the third and fourth up-down movable bodies 77, 79, respectively. Holding members 89, 91 are mounted to upper portions of the mounting arms 85, 87, respectively. The holding members 89, 91, which constitute the other-end-side support member, are each an elastic member abutting against a rear surface of the vehicle bumper 14 to be processed to elastically support it, an adsorbing member connected to a negative pressure generator (not illustrated) to adsorb and hold the rear surface of the vehicle bumper 14, or a gripping member that grips a projecting piece (not illustrated) integrally formed with the rear surface of the vehicle bumper 14 (in this example, the holding members 89, 91 are each formed as the absorbing member).

A third front-rear frame 93, extending in the front-rear direction in the drawings, is fixed to a center portion of the body frame 3. A third front-rear movable body 95 is supported by the front-rear frame 93 so as to be movable in the front-rear direction. An eleventh electric motor 97 (numerically-controllable servo motor, etc.) mounted to the third front-rear frame 93 is drive-connected to the third front-rear movable body 95. The third front-rear movable body 95 is driven by the electric motor 97 to reciprocate in the front-rear direction.

A fifth up-down frame 99 is mounted to the third front-rear movable body 95. A holding member 101 is mounted to an upper portion of the fifth up-down frame 99. The holding member 101, which serves as a reference support member, is an elastic member abutting against a rear surface of the vehicle bumper 14 to be processed to elastically support it, an adsorbing member connected to a negative pressure generator (not illustrated) to adsorb and hold the rear surface of the vehicle bumper 14, or a gripping member that grips a projecting piece (not illustrated) integrally formed with the rear surface of the vehicle bumper 14 (in this example, the holding member 101 is formed as the absorbing member).

A reciprocating mechanism of each of the movable bodies 19, 21, 31, 33, 43, 45, 65, 67, 77, 79, 95 corresponding to the first to eleventh electric motors 23, 25, 35, 37, 47, 49, 69, 71, 81, 83, 97 may be a known reciprocating mechanism such as a feed screw and nut mechanism or a feed belt mechanism. Further, a linear servo may be employed, in place of the electric motor, to constitute the reciprocating mechanism. In this example, a feed screw and nut mechanism is adopted as the reciprocating mechanism.

The following describes operations in which the resin molding burr removing apparatus 1 having the above configuration removes the burr of the vehicle bumper 14 and supports the vehicle bumper 14. First, the eleventh electric motor 97 is drive-controlled to move the third front-rear movable body 95 forward or backward, to thereby move the holding member 101 to a predetermined intermediate portion of the vehicle bumper 14 to be subjected to the burr removal in the front-rear and left-right directions.

In parallel to or after the above operation, the first and second electric motors 23, 25 are selectively drive-controlled to move the first and second front-rear movable bodies 19, 21 in the front-rear direction, to thereby move the first and second left-right frames 27, 29 such that the holding members 57, 59 are positioned at a front side of the vehicle bumper 14. In parallel to or after the above operation, the third and fourth electric motors 35, 37 are selectively drive-controlled to move the first and second left-right movable bodies 31, 33 in the left-right direction, to thereby move the holding members 57, 59 to left and right support portions of the vehicle bumper 14, which are previously set according to a longitudinal direction length of the vehicle bumper 14.

In the above state, the fifth and sixth electric motors 47, 49 are selectively drive-controlled to move the first and second up-down movable bodies 43, 45 in the up-down direction, to thereby move the holding members 57, 59 to height positions of the vehicle bumper 14 on the left and right sides thereof, which are previously set according to a processing posture.

In parallel to or after the above operation, the seventh and eighth electric motors 69, 71 are selectively drive-controlled to move the third and fourth left-right movable bodies 65, 67 in the left-right direction, to thereby move the holding members 89, 91 to support portions of the vehicle bumper 14 previously set according to the longitudinal direction length of the vehicle bumper 14.

In parallel to or after the above operation, the ninth and tenth electric motors 81, 83 are selectively drive-controlled to move the third and fourth up-down movable bodies 77, 79 in the up-down direction, to thereby move the holding members 89, 91 to height positions of the vehicle bumper 14 set on the left and right sides thereof.

With the above operations, the holding members 57, 59, 89, 91 are moved to the left-right and height positions set on the front and rear sides of the vehicle bumper 14 with the holding member 101 to support the center portion of the vehicle bumper 14 as the center, thereby stably holding the vehicle bumper 14 in an optimum supporting or holding posture according to a size and a shape thereof.

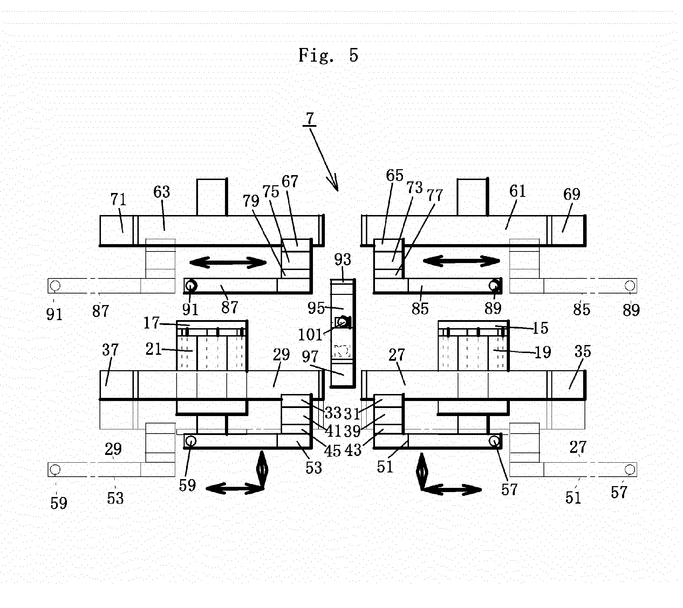

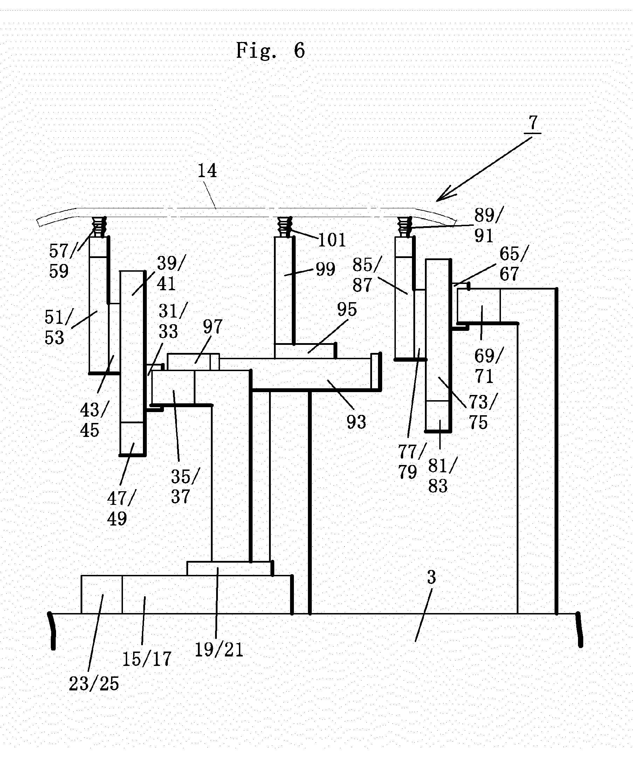

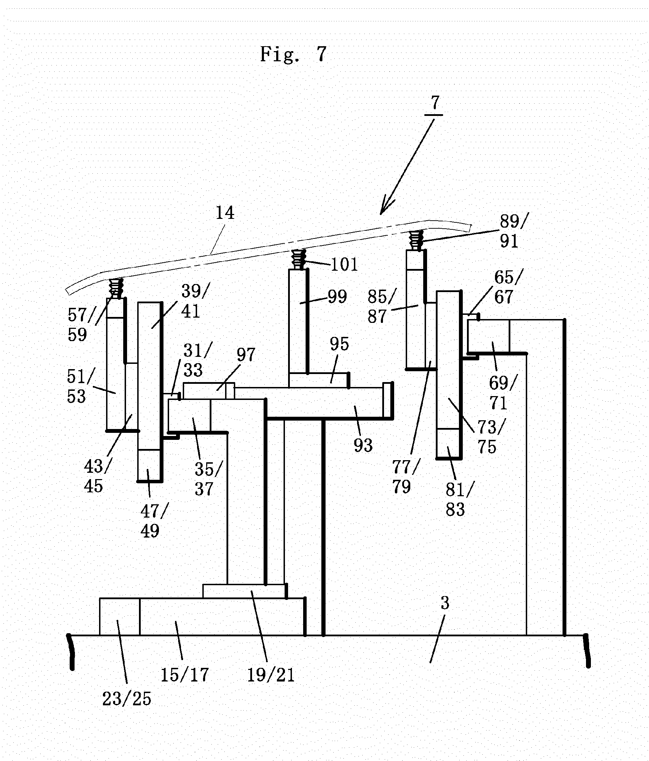

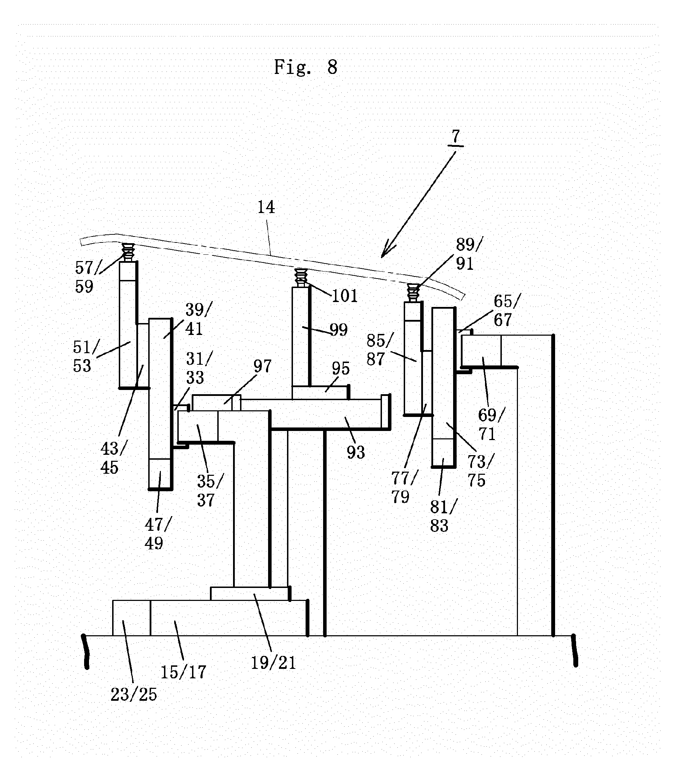

FIG. 5 illustrates a state where the front side holding members 57, 59 are moved forward and leftward/rightward, respectively, to a maximum extent and the rear side holding members 89, 91 are moved leftward and rightward, respectively, to a maximum extent, with the holding member 101 positioned at the center moved forward. FIGS. 6 to 8 illustrate states where supporting heights of the holding members 57, 59, 89, 91 are variably controlled so as to support the vehicle bumper 14 in a horizontal posture, in a forward-inclined posture, and in a rearward-inclined posture, respectively.

In the above respective states, the vehicle bumper 14 is transferred so as to be supported or held at the front side and rear side holding members 57, 59, 89, 91 which are arranged in the left-right direction with the center portion of the vehicle bumper 14 set to the center holding member 101. As a result, the vehicle bumper 14 is stably supported or held in a state where displacement with respect to the holding members 57, 59, 89, 81, 101 is restricted.

The burr cutting apparatus 5 is drive-controlled in the state where the vehicle bumper 14 is supported or held at the previously set support portions of the work support 7 to rotate and turn the first and second arms 9, 11 such that the cutting member 13 moves along a boundary between the outer edge of the vehicle bumper 14 and burr, to thereby cut and remove the burr from the vehicle bumper 14.

In the present embodiment, with the holding member 101 set to the center of the vehicle bumper 14, the holding members 57, 59 and holding members 89, 91 are moved with respect to the front-side and rear-side left and right portions of the vehicle bumper 14, thus making it possible to stably support the vehicle bumper 14 in an optimum processing posture while coping with various sizes and shapes of the vehicle bumper 14 and restricting the displacement.

Although the holding member 101 mounted to the third front-rear movable body 95 which is mounted at the center of the body frame 3 so as to be movable in the front-rear direction is fixed in height in the above description, the holding member 101 may be configured to be movable in the up-down direction as well as the front-rear direction. In this case, an up-down frame is mounted to the third front-rear movable body 95, and a support member is mounted, through a mounting arm, to an up-down movable body supported by the up-down frame so as to be movable in the up-down direction.

In the above description, the reference support member is mounted to the front-rear movable body which is mounted to the center portion of the body frame 3 so as to be movable in the front-rear direction, and end-side support members supported frontward and rearward of the reference support member so as to be movable both in the left-right direction and up-down direction. Alternatively, however, in a case where a small-sized work is to be supported, a three-point support configuration may be adopted so as to correspond to claim 1, in which two support members capable of moving both in the longitudinal direction and up-down direction are mounted on longitudinal direction both sides of the reference support member.

Further, for a large-sized work like, e.g., a resin-molded vehicle panel, required to be supported at the five or more points, a plurality of support members each moving in the left-right direction, up-down direction, and directions inclined to the above directions may be mounted, in addition to the above three support members, so as to support predetermined supporting portions other than the supporting portions supported by the above three members.

### [Second Embodiment]

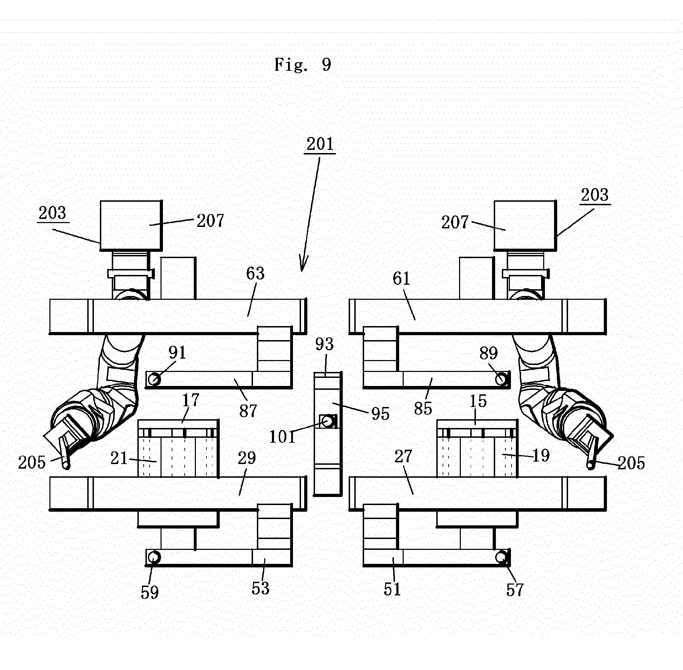

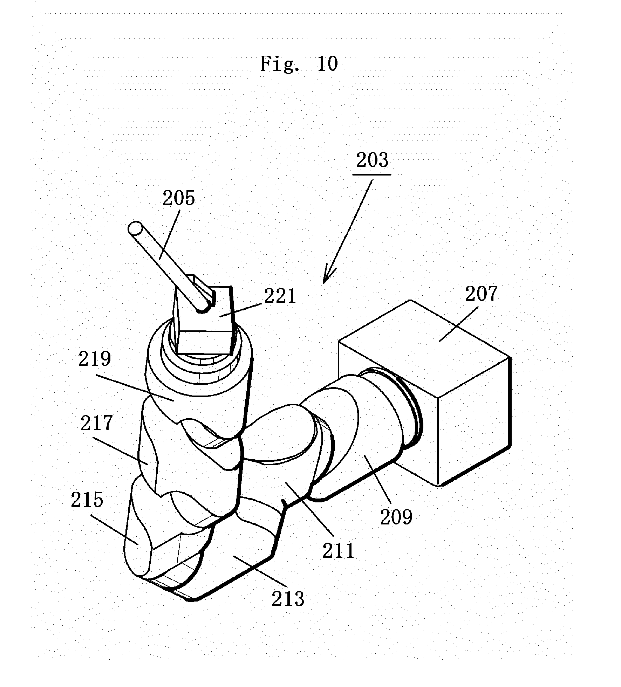

As illustrated in FIG. 9 (illustrating a drilling apparatus as a work processing apparatus in which a drilling machine as a work processing section is omitted) and FIG. 10, a drilling apparatus 201 as a work processing apparatus according to a second embodiment is an apparatus that forms a hole in a predetermined portion of the vehicle bumper 14 as a work. The drilling apparatus 201 as the work processing apparatus includes, on both sides at a rear side thereof, two movable supports 203 that support a rear surface of a peripheral edge of a portion to be drilled in the vehicle bumper 14.

The drilling machine as the work processing section of the present embodiment has a configuration in which a drilling tool such as a drill is provided in place of the cutting member 13 provided at a leading end of the second arm in the burr cutting apparatus 5 of the first embodiment, and illustration thereof is omitted. The work processing member is not limited to the above-mentioned drilling tool, but may be a rotary blade, a laser output head that performs cutting using laser beam, or the like. Configurations of the drilling apparatus 201 other than the two movable supports 203 and drilling machine are the same as those of the first embodiment, so the same reference numerals are used for the identical components, and the description thereof is omitted.

The movable supports 203 each have a multi-joint structure that moves, at least three-dimensional directions, a movable support member 205 that abuts against and supports the rear surface of the peripheral edge of the portion to be drilled in the vehicle bumper 14. The movable supports 203 includes, as illustrated in FIG. 10, first to sixth joints 209, 211, 213, 215, 217, 219, and a fixing member 221. The first joint 209 is supported by a base 207 so as to be rotatable about a horizontal axis thereof and is connected to a built-in electric motor (not illustrated). The second joint 211 is supported at a leading end of the first joint 209 so as to be rotatable about an axis inclined at a predetermined angle relative to an extending direction of the first joint 209 and is connected to a built-in electric motor (not illustrated). The third joint 213 is supported at a leading end of the second joint 211 so as to be rotatable about an axis inclined at a predetermined angle relative to an extending direction of the second joint 211 and is connected to a built-in electric motor (not illustrated). The fourth joint 215 is supported at a leading end of the third joint 213 so as to be rotatable about an axis inclined at a predetermined angle relative to an extending direction of the third joint 213 and is connected to a built-in electric motor (not illustrated). The fifth joint 217 is supported at a leading end of the fourth joint 215 so as to be rotatable about an axis orthogonal to an extending direction of the fourth joint 215 and is connected to a built-in electric motor (not illustrated). The sixth joint 219 is supported at a leading end of the fifth joint 217 so as to be rotatable about an axis orthogonal to an extending direction of the fifth joint 217 and is connected to a built-in electric motor (not illustrated). The mounting member 221 is supported at a leading end of the sixth joint 219 so as to be rotatable about an axis coinciding with an extending direction of the sixth joint 219 and is connected to a built-in electric motor (not illustrated). Numerically-controllable servo motors, etc. are suitably used as the above electric motors.

The movable support member 205 is fixed to each of the mounting members 221 so as to extend at a predetermined angle. The movable support member 205 is drive-controlled by the electric motor to be moved in seven-axis directions and then supports the rear surface of the peripheral edge of the portion to be drilled by abutting, at a leading end thereof, thereagainst.

The number of joints of the movable support 203 is not limited to the above example, but may be increased/decreased in accordance to the number of movement dimensions required for the movable support member 205.

The following describes operations to be performed by the drilling apparatus 201 having the above configuration. The operation for supporting the vehicle bumper 14 as a work is the same as that performed by the work support 7 provided in the resin molding burr removing apparatus 1 according to the first embodiment, so the detailed description thereof is omitted.

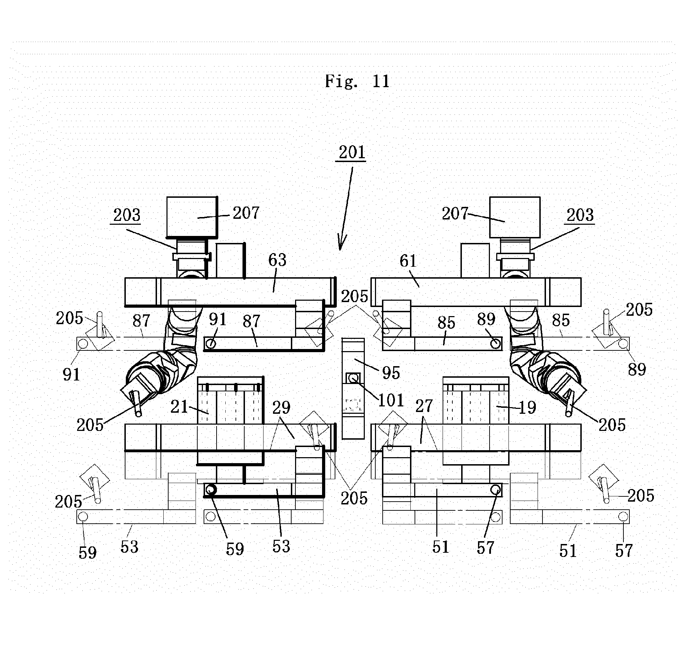

Prior to the drilling with respect to a predetermined portion of the vehicle bumper 14 supported by the work support 7, the electric motors are drive-controlled to rotate or swing the first to sixth joints 209, 211, 213, 215, 217, 219, thereby moving each of the movable support members 205 within a region among positions denoted by a long dashed short dashed line and a long dashed double-shirt dashed line in FIG. 11 and causing the same to abut against and support the rear surface of the peripheral edge of the portion to be drilled set in the vehicle bumper 14.

In the above state, the arms of the drilling machine is drive-controlled to move the drilling tool to an upper surface of the portion to be drilled in the vehicle bumper 14, and then the arms are drive-controlled to press the drilling tool against the portion to be drilled to perform drilling. At this time, the periphery of the portion to be drilled may be warped or position of the vehicle bumper 14 may be displaced due to the pressing of the drilling tool against the portion to be drilled, which may result in failing to drill a desired hole in the portion to be drilled with high accuracy. However, since the rear surface of the peripheral edge of the portion to be drilled in the vehicle bumper 14 is supported by the movable support member 205 as described above, the warp of the periphery of the portion to be drilled or displacement of the position of the vehicle bumper 14 is restricted, thereby performing the drilling for the vehicle bumper 14 with high accuracy.

The second embodiment may be modified in the same manner as the first embodiment. Further, although the movable support 203 moves, in a multi-dimensional manner, the movable support member 205 to the rear surface of the peripheral edge of the portion to be drilled in the vehicle bumper 14 based on the rotation and swing of the first to sixth joints 209, 211, 213, 215, 217, 219 in the second embodiment, the movable support 203 according to the present invention may have an orthogonal three-axis structure.

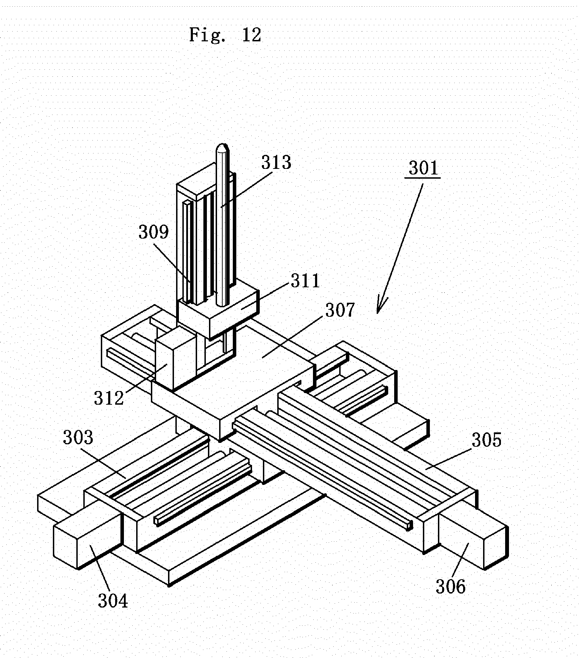

That is, as illustrated in FIG. 12, a first movable body 305 extending in the front-rear direction in the drawing is supported by a support table 303 of a movable support 301 such that both end portions of the first movable body 305 reciprocate in the left-right direction in the drawing. The first movable body 305 is caused to reciprocate in the left-right direction in the drawing by a feed screw or a timing belt connected to an electric motor 304 (numerically-controllable servo motor, etc.) mounted in the support table 303 or a linear motor mounted therein (FIG. 12 illustrates an example in which the electric motor 304 is employed). A second movable body 307 is supported by the first movable body 305 so as to reciprocate in the front-rear direction in the drawing. The second movable body 307 is caused to reciprocate in the front-rear direction in the drawing by a feed screw or a timing belt connected to an electric motor 306 (numerically-controllable servo motor, etc.) mounted in the first movable body 305 or a linear motor mounted therein (FIG. 12 illustrates an example in which the electric motor 306 is employed).

A base end of an up-down frame 309 extending in the up-down direction in the drawing is fixed to the second movable body 307, and a lifting mounting member 311 is supported by the up-down frame 309 so as to reciprocate in the up-down direction. The lifting mounting member 311 is caused to reciprocate in the up-down direction in the drawing by a feed screw or a timing belt connected to an electric motor 312 (numerically-controllable servo motor, etc.) mounted in the up-down frame 309 or a linear motor mounted therein (FIG. 12 illustrates an example in which the electric motor 312 is employed). A base end of a movable support member 313 extending in the up-down direction or extending inclined relative to the up-down direction at an appropriate angle is fixed to the lifting mounting member 311. A leading end of the movable support member 313 is made to rise and fall between a support position at which it abuts against the rear surface of the peripheral edge of the portion to be drilled in the vehicle bumper 14 and a standby position spaced downward from the support position along with rise and fall of the lifting mounting member 311.

The movable support 301 having the three-dimensional movement structure is configured to, prior to the drilling with respect to a predetermined portion of the vehicle bumper 14 supported by the work support 7, drive-control the electric motors to move the first and second movable bodies 305, 307 such that the movable support member 313 is positioned at the peripheral edge of the portion to be drilled set in the vehicle bumper 14.

In the above state, the electric motor is drive-controlled to move the lifting mounting member 311 upward to cause the leading end of the movable support member 313 to abut against and support the rear surface of the peripheral edge of the portion to be drilled. Since the movable support member 313 abuts against and supports the rear surface of the peripheral edge of the portion to be drilled in the vehicle bumper 14 when the drilling is performed by pressing the drilling tool positioned at the portion to be drilled thereagainst, the warp of the periphery of the portion to be drilled or displacement of the position of the vehicle bumper 14 is restricted, thereby performing the drilling for the vehicle bumper 14 with high accuracy.

## Claims

1. A work processing apparatus **characterized by** comprising:
a work support that supports a work; and
a work processing section that performs required processing for the work supported by the work support,
the work processing section performing the required processing by moving, at least three-dimensional directions, a work processing member relative to the work supported by the work support, and
the work support including:
a reference support member having a predetermined height, provided at a portion coinciding with a center portion of the work and capable of supporting the work by abutting against the center portion; and
two support members provided on one side of the work with respect to the reference support member so as to be movable in directions in which they approach and separate from each other and an up-down direction to support supporting portions on both sides of the work, **characterized in that**
positioning the reference support member to the center portion of the work, moving the support members in the directions in which they approach and separate from each other and the up-down direction in accordance with supporting portions of the work, and performing the required processing by controlling movement of the work processing section in a state where the work is supported in a given posture by the reference support member and two support members.

2. The work processing apparatus according to claim 1, **characterized in that**
the reference support member is mounted to a front-rear movable body that is supported, between one end portion and the other end portion of the work in a direction orthogonal to a longitudinal direction of the work, so as to be movable in the direction orthogonal to the longitudinal direction of the work and is configured to movable to the center portion of the work according to a size and shape of the work.

3. The work processing apparatus according to claim 2, **characterized in that**
the reference support member is supported so as to be movable in the up-down direction relative to the front-rear movable body.

4. The work processing apparatus according to claim 1, **characterized in that**
Each of the support members are mounted to each up-down movable bodies supported so as to be movable in the up-down direction to each left-right movable bodies which are supported so as to be movable in the longitudinal direction of the work, the support members each being capable of changing its position in the longitudinal direction of the work and up-down direction according to the size and shape of the work.

5. The work processing apparatus according to claim 1, **characterized in that**
each of the support members are each mounted to a front-rear movable body supported so as to be movable in the direction orthogonal to the longitudinal direction of the work and are each capable of changing its position in the direction orthogonal to the longitudinal direction of the work on an end portion side of the work in the direction orthogonal to the longitudinal direction according to the size and shape of the work.

6. The work processing apparatus according to claim 1, **characterized in that**
movable supports each moving, at least three-dimensional directions, a movable support member are provided between the reference support member and support members, and
each movable support member can support the work by abutting against a rear surface of a peripheral edge of a portion to be processed in the work supported by the reference support member and support members.

7. The work processing apparatus according to claim 6, **characterized in that**
the movable supports each include:
a first movable body movable in orthogonal direction; a second movable body mounted to the first movable body so as to be movable in each direction of the two orthogonal axes to the first movable body; and a lifting body mounted to the second movable body in each direction of the two orthogonal axes so as to be movable in the up-down direction and attached with the movable support member, and
the movable support member is allowed to move three-dimensional directions and to abut against the rear surface of the peripheral edge of a portion to be processed by the movement of the first and second movable members and the lifting body.

8. A work processing apparatus **characterized by** comprising:
a work support that supports a work; and
a work processing section that performs required processing for the work supported by the work support,
the work processing section performing the required processing by moving, at least three-dimensional directions, a work processing member relative to the work supported by the work support,
the work support including:
a reference support member having a predetermined height, provided at a portion coinciding with a center portion of the work and capable of supporting the work by abutting against the center portion; and
two first support members provided at one end side of the work in a direction orthogonal to a longitudinal direction of the work so as to be movable in the longitudinal direction and an up-down direction and support each supporting portions, on longitudinal direction both sides of the work at the one end side of the work in the direction orthogonal to the longitudinal direction; and
two second support members provided at the other end side of the work in the direction orthogonal to the longitudinal direction of the work so as to be movable in the longitudinal direction and an up-down direction and support each supporting portions, on the longitudinal direction both sides of the work at the other end side of the work in the direction orthogonal to the longitudinal direction, **characterized in that**
positioning the reference support member to the center portion of the work, moving the two first support members and the two second support members to the supporting portions previously set, in accordance with supporting portions of the work, and performing the required processing by controlling movement of the work processing section in a state where the work is supported in a given posture by the reference support member, two first support members, and two second support members.

9. The work processing apparatus according to claim 8, **characterized in that**
the reference support member is mounted to a front-rear movable body that is supported, between one end portion and the other end portion of the work in a direction orthogonal to a longitudinal direction of the work, so as to be movable in the direction orthogonal to the longitudinal direction of the work and is configured to movable to the center portion of the work according to a size and shape of the work.

10. The work processing apparatus according to claim 9, **characterized in that**
the reference support member is supported so as to be movable in the up-down direction relative to the front-rear movable body.

11. The work processing apparatus according to claim 8, **characterized in that**
the first support members and the second support members are each mounted to respective up-down movable bodies supported so as to be movable in the up-down direction by left-right movable bodies which are supported so as to be movable in the longitudinal direction of the work at the direction orthogonal to the longitudinal direction one end side of the work, and are capable of changing their positions in the longitudinal direction of the work and up-down direction according to the size and shape of the work.

12. The work processing apparatus according to claim 8, **characterized in that**
at least one of the first support members and second support members are each mounted to a front-rear movable body supported so as to be movable in the direction orthogonal to the longitudinal direction of the work and are each capable of changing its position in the direction orthogonal to the longitudinal direction of the work on an end portion side of the work in the direction orthogonal to the longitudinal direction according to the size and shape of the work.

13. The work processing apparatus according to claim 8, **characterized in that**
movable supports each moving, at least three-dimensional directions, a movable support member are each provided between the reference support member, the first support members and second support members, and
each movable support member can support the work by abutting against a rear surface of a peripheral edge of a portion to be processed in the work supported by the reference support member, the first support members and the second support members.

14. The work processing apparatus according to claim 13, **characterized in that**
the movable supports each include:
a first movable body movable in orthogonal direction; a second movable body mounted to the first movable body so as to be movable in each direction of the two orthogonal axes to the first movable body; and a lifting body mounted to the second movable body in each direction of the two orthogonal axes so as to be movable in the up-down direction and attached with the movable support member, and
the movable support member is allowed to move three-dimensional directions and to abut against the rear surface of the peripheral edge of a portion to be processed by the movement of the first and second movable members and the lifting body.
